(19) Europäisches Patentamt / European Patent Office / Office européen des brevets

(11) **EP 4 400 308 A1**

(12) **EUROPEAN PATENT APPLICATION**
published in accordance with Art. 153(4) EPC

(43) Date of publication:
**17.07.2024 Bulletin 2024/29**

(21) Application number: **22867239.0**

(22) Date of filing: **29.08.2022**

(51) International Patent Classification (IPC):
**B32B 27/32** (2006.01)

(52) Cooperative Patent Classification (CPC):
**B32B 27/32; Y02W 30/80**

(86) International application number:
**PCT/JP2022/032422**

(87) International publication number:
**WO 2023/037917 (16.03.2023 Gazette 2023/11)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **10.09.2021 JP 2021147801**

(71) Applicant: **Toyobo Co., Ltd.**
**Kita-ku**
**Osaka-shi, Osaka 530-0001 (JP)**

(72) Inventors:
• **YAMAZAKI, Atsushi**
  **Inuyama-shi, Aichi 484-8508 (JP)**
• **Iwata, Daisuke**
  **Inuyama-shi, Aichi 484-8508 (JP)**
• **YAMAGUCHI, Yuya**
  **Osaka-shi, Osaka 530-0001 (JP)**

(74) Representative: **Vossius & Partner**
**Patentanwälte Rechtsanwälte mbB**
**Siebertstrasse 3**
**81675 München (DE)**

(54) **LAMINATED LAYERED BODY**

(57) An object to be solved by the present invention is to provide a laminated body having a laminate composed of substantially a single type of resin whose environmental load is small and having gas barrier property, heat-sealability, and toughness required for a packaging material. The laminated body of the present invention is a laminated body in which two stretched substrate films containing a polypropylene resin as a raw material and one heat sealable layer containing a resin are laminated with via an adhesive, wherein at least one of the substrate films has a coating layer containing a polyvinyl alcohol copolymer and a layered inorganic compound or an inorganic thin layer on one side of the substrate film, the one heat sealable layer is composed of an olefin resin containing a polypropylene resin or a polyethylene resin as a main constituent component, and the laminated body satisfies the following requirements (a) to (d):

(a) the laminated body has piercing strength of 15 N or more,

(b) the laminated body has oxygen permeability of 20 ml/m$^2$·d·MPa or less at 23 °C and 65% RH and water vapor permeability of 2.0 g/m$^2$·d or less at 40 °C and 90 % RH,

(c) the laminated body in which the heat sealable layer is sealed at one end and another end under conditions of 160 °C and 0.2 MPa for 2 seconds has seal strength of 15 N/15mm or more, and

(d) the laminated body has a heat shrinkage rate of 1.8 % or less at 120 °C for 5 minutes.

EP 4 400 308 A1

**Description**

TECHNICAL FIELD

The present invention relates to a laminated body used in the field of packaging for food, pharmaceutical products, industrial products, and the like. More specifically, the present invention relates to an environment-adaptive laminated body that is excellent in gas barrier property, processability, and toughness and that is convenient.

BACKGROUND ART

In recent years, regulations for reduction of use of disposable plastics have been tightened in Europe and other countries around the world. In the background thereof, there are growing international consciousness regarding circulation of resources, and worsening problems of wastes in emerging countries. Therefore, environment-adaptive-type products are required from the viewpoint of 3R (recycle, reuse, reduce) also for plastic packaging materials for food, pharmaceutical products, and the like.

As one possibility for realizing the aforementioned environmentally friendly packaging material, making a packaging material from a recyclable single material, i.e., mono-materialization, is actively considered. As materials for mono-materialization, for example, polyester-based materials or olefin-based materials are each being considered.

In the current state, while packaging materials with low environmental loads are required, properties required for the packaging materials themselves are increasingly becoming multifunctional for convenience. For example, in case where a pouch is used in a microwave oven without using aluminum foil, gas barrier property, heat resistance, toughness (bag breakage resistance and pinhole resistance), high sealability, and the like are simultaneously required in a single packaging bag. In order to achieve these, different materials respectively having different functions need to be attached together, and there is a general configuration of at least three or more layers in which a vapor-deposited polyester film on the outer side of the bag, a polyamide film in a middle layer, and an olefin-based heat-sealable resin on the inner side (contents side) are dry-laminated with each other via an adhesive. With the configuration, intended performances can be achieved. However, there is a problem that recyclability is inferior because different materials are attached together, and such a packaging material cannot be said to be an environmentally friendly packaging material mentioned above.

From considerations of these, it has been considered whether an ideal packaging material having multifunctionality as a bag as mentioned above can be designed with use of the same material that can realize mono-materialization.

In design of a polyester-based mono-material packaging material, as a substitute for conventional olefin-based sealants, a polyester-based sealant having improved low adsorption and heat resistance has been disclosed (for example, see Patent Document 1). In the sealant of Patent Document 1, a layer having heat-sealability is separated from the other layers, and raw material compositions of these layers are separately controlled, whereby heat-sealability and heat resistance are satisfied. However, regarding heat-sealability, there is a problem that sealing strength of the sealant of Patent Document 1 is inferior to that of olefin-based sealants. In addition, in the current state, regarding heat resistance, the sealant of Patent Document 1 cannot withstand severe treatment such as boiling and retorting.

Meanwhile, in design of an olefin-based mono-material packaging material, there has been a problem that gas barrier performance is inferior to that of conventional packaging having barrier performance. Although a polypropylene film has water vapor barrier property, there has been problems that the value thereof is not sufficient as compared with, for example, a transparent inorganic vapor-deposited polyester film having generally excellent water vapor barrier property, and that oxygen barrier property is very bad.

On the contrary, a film in which a polymer resin composition containing polyvinyl alcohol, ethylene-vinylalcohol copolymer, polyvinylidene chloride resin, or polyacrylonitrile having generally a relatively high oxygen barrier property is stacked on a polypropylene film has been used (for example, see Patent Documents 2 to 4). However, a coat film having gas barrier property formed with the above polymer resin composition containing polyvinyl alcohol or ethylene-vinylalcohol copolymer as mentioned above has large humidity dependence, and thus, decrease in gas barrier property is observed under high humidity. Meanwhile, in a case of polyvinylidene chloride resin and polyacrylonitrile, although humidity dependence is low, there have been problems that their barrier properties in terms of absolute values are insufficient; and hazardous substances are generated upon disposal/incineration thereof at a high risk. Further, the above-described barrier coat layers each need to be stacked so as to have a film thickness of at least 0.5 $\mu$m or larger in order to exhibit sufficient barrier performance. When the film thickness of the coat layer is large, recycling may become difficult, and such a film is not suitable also from the viewpoint of mono-materialization by means of a single material.

Regarding improvement of gas barrier property of polypropylene films, there is also an attempt in which an inorganic thin film is stacked to cause stable gas barrier performance to be exhibited without humidity dependence (for example, Patent Document 5). However, there are also problems that the absolute value (oxygen barrier property, in particular) of the gas barrier performance is inferior to that of conventional vapor-deposited polyester films, and that such a film is weak against physical damage as compared with the aforementioned coat-type barrier film. A barrier material obtained by subjecting an olefin-based sealant to vapor deposition is also considered (for example, Patent Document 6). However, although water vapor barrier performance is exhibited, there is a problem that oxygen barrier property is not sufficient, and the like.

CITATION LIST

PATENT DOCUMENT

Patent Document 1: Japanese Laid-Open Patent Publication No. 2017-165059
Patent Document 2: Japanese Laid-Open Patent Publication No. 2000-52501
Patent Document 3: Japanese Laid-Open Patent Publication No. H04-359033
Patent Document 4: Japanese Laid-Open Patent Publication No. 2003-231221
Patent Document 5: International Publication No. WO2017/221781
Patent Document 6: Japanese Patent No. 3318479

SUMMARY OF THE INVENTION

PROBLEMS TO BE SOLVED BY THE INVENTION

Therefore, in the above Patent Documents, it is difficult to achieve both mono-materialization of a packaging material and realization of various performances required for a packaging member, and a packaging material that is environmentally friendly and that is also highly convenient has not been able to be designed.
The present invention has been made in consideration of the problems of such conventional technologies in the background.
That is, an object of the present invention is to provide a laminated body that allows formation of a laminate composed of substantially a single resin whose environmental load is small, and that has gas barrier property and heat-sealability required for a packaging material, and further, necessary performances such as processing suitability and the like.

SOLUTION TO THE PROBLEMS

The present inventors has found that gas barrier performance is improved to a large extent by stacking a predetermined coat layer adapted to required performances onto a polypropylene-based stretched substrate film to form a layered film, further toughness and heat resistance are ensured by attaching two layered films together, and finally mono-materialization with high heat-sealability maintained is realized by laminating a sealant composed of an olefin-based component. Through the above, the present inventors found that a laminated body that is environmentally friendly and that is also highly convenient can be provided to complete the present invention.
Specifically, the present invention contains the following features:

(1) A laminated body in which two stretched substrate films containing a polypropylene resin as a raw material and one heat sealable layer containing a resin are laminated with via an adhesive, wherein

at least one of the substrate films has a coating layer containing a polyvinyl alcohol copolymer and a layered inorganic compound or an inorganic thin layer on one side of the substrate film,
the one heat sealable layer is composed of an olefin resin containing a polypropylene resin or a polyethylene resin as a main constituent component, and
the laminated body satisfies the following requirements (a) to (d):

(a) the laminated body has piercing strength of 15 N or more,
(b) the laminated body has oxygen permeability of 20 ml/m$^2$·d·MPa or less at 23 °C and 65% RH and water vapor permeability of 2.0 g/m$^2$·d or less at 40 °C and 90 % RH,
(c) the laminated body in which the heat sealable layer is sealed at one end and another end under conditions of 160 °C and 0.2 MPa for 2 seconds has seal strength of 15 N/15mm or more, and
(d) the laminated body has a heat shrinkage rate of 1.8 % or less at 120 °C for 5 minutes in the MD direction and the TD direction of the stretched substrate films.

(2) The laminated body according to the above (1), wherein the layered inorganic compound of the coating layer comprises a montmorillonite compound as a constituent component.

(3) The laminated body according to the above (1) or (2), wherein an adhesion amount of the coating layer is 0.10 g/m$^2$ or more and 0.50 g/m$^2$ or less.

(4) The laminated body according to any one of (1) to (3), wherein the inorganic thin layer is composed of aluminum oxide, silicon oxide, or a composite oxide of silicon oxide and aluminum oxide.

(5) The laminated body according to any one of (1) to (4), wherein at least one of the substrate films has a heat shrinkage rate of 10% or less in the MD direction and the TD direction under conditions of 150 °C for 5 minutes.

ADVANTAGEOUS EFFECTS OF THE INVENTION

According to the present invention, a laminated body having necessary performances such as barrier property, heat-sealability, and toughness required for a packaging material in consideration of the environment can be provided.

DESCRIPTION OF EMBODIMENTS

A laminated body of the present invention is a laminated body in which two stretched substrate films containing a polypropylene resin as a raw material and one heat sealable layer containing a resin are laminated with via an adhesive, wherein at least one of the substrate films has a coating layer containing a polyvinyl alcohol copolymer and a layered inorganic compound or an inorganic thin layer on one side of the substrate film, the one heat sealable layer is composed of an olefin resin containing a polypropylene resin or a polyethylene resin as a main constituent component, and the laminated body satisfies the following requirements (a) to (d):

(a) the laminated body has piercing strength of 15 N or more,

(b) the laminated body has oxygen permeability of 20 ml/m$^2 \cdot$d$\cdot$MPa or less at 23 °C and 65% RH and water vapor permeability of 2.0 g/m$^2 \cdot$d or less at 40 °C and 90 % RH,

(c) the laminated body in which the heat sealable layer is sealed at one end and another end under conditions of 160 °C and 0.2 MPa for and 2 seconds has seal strength of 15 N/15mm or more, and

(d) the laminated body has a heat shrinkage rate of 1.8 % or less at 120 °C for 5 minutes.

Hereinafter, the present invention will be described in detail.

[Substrate film layer]

A stretched propylene resin film used as a substrate film in the present invention is preferably a biaxially stretched propylene resin film. As the biaxially stretched polypropylene resin film, a known biaxially stretched polypropylene resin film can be used, and the raw material, mixing ratio, and the like thereof are not limited in particular. For example, a propylene includes a polypropylene homopolymer (propylene homopolymer); a random copolymer or a block copolymer of one or two or more selected from α-olefins such as ethylene, butene, pentene, and hexene, with propylene as a main component; or a mixture obtained by mixing two or more polymers. In order to modify physical properties, known additives such as an antioxidant, an antistatic agent, and a plasticizer may be added. For example, a petroleum resin, a terpene resin, or the like may be added.

The biaxially stretched polypropylene resin film used in the present invention may be a single layer film, or may be a layered film in which a plurality of resin films including the biaxially stretched polypropylene resin film are stacked. In a case of a layered film, the type of the layered body, the number of layers, and the layering method are not limited in particular, and can be selected as desired from known methods according to the purpose.

In the present invention, as the polypropylene resin forming the substrate film, a propylene homopolymer that does not substantially include any comonomer is preferable. Even when a comonomer is included, the amount of the comonomer is preferably 0.5 mol% or lower. The upper limit of the comonomer amount is more preferably 0.3 mol% and further preferably 0.1 mol%. Within the above range, crystallinity improves and dimensional change at a high temperature becomes small. That is, the elongation rate (hereinafter, heating elongation rate) when heated to a certain temperature becomes small, and heat resistance improves. As long as crystallinity is not significantly decreased, only a small amount of a comonomer may be included.

The polypropylene resin forming the substrate film preferably includes a propylene homopolymer obtained only from a propylene monomer. Even in a case of a propylene homopolymer, one that does not include different bonds such as in a head-to-head bond is most preferable.

The lower limit of the xylene soluble portion of the polypropylene resin forming the substrate film is preferably 0.1 mass% from the viewpoint of the realistic aspect. The upper limit of the xylene soluble portion is preferably 7 mass%, more preferably 6 mass%, and further preferably 5 mass%. Within the above range, crystallinity improves, the heating elongation rate becomes smaller, and heat resistance improves.

In the present invention, the lower limit of the melt flow rate (MFR) (230°C, 2.16 kgf) of the polypropylene resin is preferably 0.5 g/10 minutes. The lower limit of the MFR is more preferably 1.0 g/10 minutes, further preferably 2.0 g/10 minutes, particularly preferably 4.0 g/10 minutes, and most preferably 6.0 g/10 minutes. Within the above range, the mechanical load is small, and extrusion and stretching become easy. The upper limit of the MFR is preferably 20 g/10 minutes. The upper limit of the MFR is more preferably 17 g/10 minutes, further preferably 16 g/10 minutes, and particularly preferably 15 g/10 minutes. When the MFR is within the above range, stretching becomes easy, thickness unevenness becomes small, the stretching temperature and the heat-setting temperature can be easily increased, the heating elongation rate becomes smaller, and heat resistance improves.

From the viewpoint of heat resistance, the substrate film may be a uniaxially stretched film stretched in the longitudinal direction (MD direction) or the transverse direction (TD direction), but the substrate film is preferably a biaxially stretched film. In the present invention, by performing stretching at least uniaxially, it is possible to obtain a film that has high heat resistance and a low heat shrinkage rate at a high temperature, which has been unpredictable in a conventional polypropylene film. Examples of the stretching method include a simultaneous biaxial stretching method and a sequential biaxial stretching method. From the viewpoint of realizing good flatness, dimensional stability, thickness unevenness, and the like, a sequential biaxial stretching method is preferable.

In the sequential biaxial stretching method, the polypropylene resin is heated and melted by a single-screw or twin-screw extruder such that the resin temperature becomes 200°C or higher and 280°C or lower to form a sheet shape by a T-die; and the sheet is extruded on a chill roll at a temperature of 10°C or higher and 100°C or lower to obtain an unstretched sheet. Next, the unstretched sheet may be roll-stretched 3.0 times or more and 8.0 times or less in the longitudinal direction (MD direction) at 120°C or higher and 165°C or lower, subsequently, preheated in a tenter, and then, stretched 4.0 times or more and 20.0 times or less in the transverse direction (TD direction) at a temperature of 155°C or higher and 175°C or lower. Further, after the biaxial stretching, while the sheet is allowed to be relaxed by 1% or more and 15% or less at a temperature of 165°C or higher and 175°C or lower, heat-setting treatment may be carried out.

In the present invention, the substrate film preferably has the heat shrinkage rate of 10% or lower at 150°C for 5 minutes in each of the MD direction and the TD direction. Accordingly, dimensional change of the substrate material is stabilized, and qualities in printing processing and lamination processing can be more improved. Further, appearance of the seal portion when the laminated body is sealed improves. The heat shrinkage rate at 150°C for 5 minutes is preferably 8% or lower and more preferably 7% or lower, and the lower limit thereof is preferably 0%. When the heat shrinkage rate at 150°C for 5 minutes exceeds 10%, heat wrinkles, sagging, and the like are likely to occur during processing, and thus, qualities at the print surface, the lamination surface, and the seal surface may decrease.

The heat shrinkage rate at 120°C for 5 minutes is preferably 0.8% or lower and more preferably 0.7% or lower, and the lower limit thereof is preferably -0.8%. When the heat shrinkage rate at 120°C for 5 minutes exceeds 1%, heat wrinkles, sagging, and the like are likely to occur during processing, and thus, qualities at the print surface, the lamination surface, and the seal surface may decrease.

As for the substrate film used in the present invention, it is preferable that the film contains particles to form protrusions on the film surface in order to provide handleability (e.g., rollability after stacking). Examples of the particles to be contained in the film include inorganic particles such as silica, kaolinite, talc, calcium carbonate, zeolite, and alumina, and heat-resistant polymer particles such as acrylic, PMMA, nylon, polystyrene, polyester, and a benzoguanamine-formalin condensation product. From the viewpoint of transparency, the content of the particles in the film is preferably small, and preferably 1 ppm or more and 1000 ppm or less. A preferable average particle diameter of the particles is 1.0 to 3.0 $\mu$m and more preferably 1.0 to 2.7 $\mu$m. In the measurement method of the average particle diameter here, the particles are photographed by a scanning electron microscope, the Feret's diameters in the horizontal direction are measured by using an image analyzer, and the average value thereof is indicated as the average particle diameter. Further, from the viewpoint of transparency, it is preferable to select particles whose refractive index is close to that of the resin to be used. The film may contain an antioxidant, an ultraviolet absorber, an antistatic agent, a pigment, a lubricant, a nucleating agent, an adhesive, an antifogging agent, a flame retardant, an anti-blocking agent, an inorganic or organic filler, and the like in order to provide various functions as necessary.

The film may contain components other than the polypropylene resin used in the present invention in order to improve mechanical properties of the substrate film and adhesiveness with an ink layer or an adhesion layer stacked on the gas-barrier coat layer, as long as the purpose of the present invention is not impaired. Examples thereof include a polypropylene resin different from the above, a random copolymer being a copolymer of propylene and ethylene and/or an $\alpha$-olefin having 4 or more carbon atoms, and various elastomers.

In the present invention, the thickness of the substrate film is set as desired so as to be adapted to each application, but the lower limit of the thickness of the substrate film is preferably 2 $\mu$m or larger, more preferably 3 $\mu$m or larger, and further preferably 4 $\mu$m or larger. Meanwhile, the upper limit of the thickness of the substrate film is preferably 300 $\mu$m or smaller, more preferably 250 $\mu$m or smaller, further preferably 200 $\mu$m or smaller, and particularly

preferably 100 $\mu$m or smaller. When the thickness is small, handleability is likely to be poor. Meanwhile, when the thickness is large, there will be a problem in terms of cost, and when the film is wound into a roll shape and stored, poor flatness due to curling is likely to be caused.

The polypropylene film used as the substrate material of the present invention preferably has transparency from the viewpoint of visibility of the contents. Specifically, the haze of the polypropylene film is preferably 6% or lower, more preferably 5% or lower, and further preferably 4% or lower. For example, haze tends to be bad when the stretching temperature or the heat-setting temperature is too high, when the cooling roll (CR) temperature is high and the cooling rate of the stretch raw sheet is slow, and when the content of a low molecular weight component is too large. Therefore, by adjusting these, haze can be controlled within the above range.

The substrate film layer in the present invention may be subjected to corona discharge treatment, glow discharge treatment, flame treatment, or surface roughening treatment as long as the purpose of the present invention is not impaired, and may be subjected to known anchor coating treatment, printing, decoration, or the like. Generally, a resin having good adhesiveness such as polyurethane or polyester is suitably used for anchor coating.

[Coating layer]

In the present invention, it is preferable to provide a coating layer for the purpose of improving gas barrier performance and adhesiveness of the substrate film. However, in the present invention, the coating layer needs to be designed in consideration of occurrence of increased cost due to increase in the number of steps to provide the coating layer, and of environmental load such that recycling becomes difficult depending on the film thickness.

Preferably, an adhesion amount of the coating layer is set to be 0.10 to 0.50 (g/m$^2$). The present inventors have found that all of gas barrier property, coat appearance, adhesiveness, and recyclability can be realized in case where a coating layer using a polyvinyl alcohol-based copolymer and an inorganic layer compound as described later is used for the polypropylene-based resin substrate film described above with the specific adhesion amount range described above. Accordingly, the coating layer can be controlled to be uniform during coating, resulting in a film with less coating unevenness and defects. The thinness of the coating layer can contribute to foreign matter reduction and the like for recycle use. The lower limit of the adhesion amount of the coating layer is preferably 0.15 (g/m$^2$) or larger, more preferably 0.20 (g/m$^2$) or larger, and further preferably 0.25 (g/m$^2$) or larger. The upper limit thereof is preferably 0.45 (g/m$^2$) or smaller, more preferably 0.40 (g/m$^2$) or smaller, and further preferably 0.35 (g/m$^2$) or smaller. When the adhesion amount of the coating layer exceeds 0.50 (g/m$^2$), although gas barrier property improves, cohesive power inside the coating layer becomes insufficient, and uniformity of the coating layer also decreases. As a result, unevenness (increase in haze, whitening) or defects may be caused in the coat appearance, or gas barrier property/adhesiveness may fail to be sufficiently exhibited. In addition, blocking may cause due to a large film thickness from the viewpoint of processability. Further, there is a concern that recyclability of the film may be adversely affected. Meanwhile, when the adhesion amount of the coating layer is smaller than 0.10 (g/m$^2$), sufficient gas barrier property and close contact between layers may fail to be obtained.

As a resin composition to be used for the coating layer formed on the surface of the laminated film of the present invention, a polyvinyl alcohol polymer is desirable. The polyvinyl alcohol polymer has a vinyl alcohol unit as a main component, and significant improvement of barrier performance due to high cohesiveness caused by the hydrogen bond structure can be expected. The degree of polymerization and the degree of saponification of the polyvinyl alcohol polymer are determined based on the intended gas barrier property, the viscosity of the aqueous coating solution, and the like. The degree of polymerization is preferably 2600 or less from the viewpoint of coating workability because high viscosity of the aqueous solution and tendency of becoming a gel make it difficult to perform coating. As for the degree of saponification, when the degree of saponification is lower than 90%, sufficient oxygen gas barrier property under high humidity cannot be obtained, and when the degree of saponification exceeds 99.7%, the aqueous solution is difficult to be adjusted and tends to gel, and thus such a degree of saponification is not suitable for industrial production. Therefore, the degree of saponification is preferably 90 to 99.7% and further preferably 93 to 99%. In the present invention, various copolymerized or modified polyvinyl alcohol polymers such as a polyvinyl alcohol polymer obtained through copolymerization of ethylene and a polyvinyl alcohol polymer modified with silanol can also be used, as long as processability and productivity are not impaired.

The coating layer of the present invention contains an inorganic layer compound. With the presence of the inorganic layer compound, a maze effect against gas can be expected to improve gas barrier property. In addition, humidity dependence of gas barrier property can be suppressed with addition of the inorganic layer compound. Examples of the inorganic layer compound can include clay minerals (including synthetic products thereof) such as smectite, kaolin, mica, hydrotalcite, and chlorite. Specific examples thereof can include montmorillonite, beidellite, saponite, hectorite, sauconite, stevensite, kaolinite, nacrite, dickite, halloysite, hydrated halloysite, tetra silicic mica, sodium taeniolite, muscovite, margarite, phlogopite, talc, antigorite, chrysotile, pyrophyllite, vermiculite, xanthophyllite, and chlorite. Further, flake silica or the like can also be used as the inorganic layer compound. These may be used individually, or two or more types of these may be used in combination. Among these, smectite (including synthetic products thereof) is particularly preferable since the effect of improving water vapor barrier property is high.

In addition, the inorganic layer compound may have a metal ion having oxidationreduction properties, in particular, an iron ion. Further, among these, montmorillonite, which is one type of smectite, is preferable from the viewpoint of coating suitability and gas barrier property. As the montmorillonite, known montmorillonite having been conventionally used in gas barrier agents can be used. Examples of montmorillonite are represented by the general formula below:

$$(X,Y)_{2-3}Z_4O_{10}(OH)_2 \cdot mH_2O \cdot (W\omega)$$

(where X represents Al, Fe(III), or Cr(III). Y represents Mg, Fe(II), Mn(II), Ni, Zn, or Li. Z represents Si or Al. W represents K, Na, or Ca. $H_2O$ represents interlayer water, m and $\omega$ each represent a positive real number.)

Among these, one in which W in the formula is Na is preferable since cleavage occurs in an aqueous medium.

The size and the shape of the inorganic layer compound are not limited particularly and the particle diameter (long diameter) thereof is preferably 5 $\mu$m or smaller, more preferably 4 $\mu$m or smaller, and further preferably 3 $\mu$m or smaller. When the particle diameter is larger than 5 $\mu$m, dispersibility becomes inferior, and consequently, coatability or coat appearance of the coating layer may deteriorate. Meanwhile, the aspect ratio thereof is preferably 50 to 5000, more preferably 100 to 4000, and further preferably 200 to 3000.

The blending ratio of the polyvinyl alcohol copolymer and the inorganic layer compound in the coating layer of the present invention is preferably 75/25 to 35/65 (wt%), more preferably 70/30 to 40/60 (wt%), and further preferably 65/35 to 45/55 (wt%). When the blending ratio of the inorganic layer compound is lower than 25 wt%, barrier performance may become insufficient. Meanwhile, when the blending ratio of the inorganic layer compound is higher than 65 wt%, dispersibility may become bad, resulting in deteriorated coatability, and adhesiveness may deteriorate.

In the present invention, the ratio (P1/P2) of a peak intensity (P1) having an absorption maximum in a region of 1040±10 cm$^{-1}$ to a peak intensity (P2) having an absorption maximum in a region of 3300±10 cm$^{-1}$ in the total reflection infrared absorption spectrum of the coating layer needs to be in a range of 3.0 to 25.0. The ratio (P1/P2) is preferably in a range of 4.0 to 24.0 and more preferably in a range of 5.0 to 23.0. The peak in 1040±10 cm$^{-1}$ is a peak derived from a silica molecular structure and serves as an index indicating an amount of silica bonds derived from the inorganic layer compound in the coating layer. The peak in 3300±10 cm$^{-1}$ is a peak derived from hydroxy groups and serves as an index indicating an amount of hydroxy groups in the coating layer. The ratio (P1/P2) represents the ratio between silica bonds and hydroxy groups. When the ratio is in the above range, silica particles are arranged in the film without inhibiting the hydrogen bonds of the hydroxy groups, and as a result, gas barrier performance is exhibited to the maximum extent. In addition, close contact can also be simultaneously exhibited. When the ratio (P1/P2) is less than 3.0, the amount of silica bonds in the coating layer is small, and maze effects are not obtained, and thus, satisfactory gas barrier property may be hardly obtained. In addition, blocking of the coating layer may also be likely to occur with respect to processability. Meanwhile, when the ratio (P1/P2) exceeds 25.0, although gas barrier property improves, the film becomes brittle to be disadvantageous in terms of adhesiveness when the coating layer is used in a laminated body. In addition, dispersibility of the coating liquid becomes bad, and there is a concern that poor appearance (increase in haze, whitening) during coating may be caused. In order to cause the value of the ratio (P1/P2) of the coating layer to be in the range of the predetermined numerical value described above, it is necessary to combine the predetermined adhesion amount described above with use of the materials described above, the blending ratio of the materials to be in the appropriate range as described above, and drying-heat treatment conditions as described later in combination.

In the coating layer of the present invention, for the purpose of improving cohesive power of the film and improving heat-and-humidity-resistant adhesiveness, various crosslinking agents may be blended as long as gas barrier property and productivity are not impaired. Examples of the crosslinking agent can include silicon crosslinking agents, oxazoline compounds, carbodiimide compounds, epoxy compounds, and isocyanate compounds. Among these, a silicon crosslinking agent is particularly preferable from the viewpoint of improving water-resistant adhesiveness with the inorganic layer in particular by blending a silicon crosslinking agent. As other crosslinking agent, an oxazoline compound, a carbodiimide compound, an epoxy compound, or the like may be used in combination. However, when recyclability is important, it is preferable that the addition amount of the crosslinking agent is as small as possible or no crosslinking agent is blended.

In the present invention, the haze of the film after laminating the coating layer is preferably 20% or lower, more preferably 18% or lower, and further preferably 16% or lower from the viewpoint of visibility of the contents. When the haze is higher than 20%, transparency deteriorates to a large extent, and in addition, there is a concern that projections and recesses on the surface may be influenced, leading to poor appearance in a later printing step and the like. The haze can be adjusted according to the composition ratio of the coating layer, the solvent condition, the film thickness, and the like. Evaluation of the haze here is performed according to JIS K7136, using a turbidimeter (manufactured by NIPPON DENSHOKU INDUSTRIES, NDH2000).

The coating method for the resin composition for the coating layer is not limited in particular as long as coating is performed on the film surface to form the coating layer. For example, an ordinary coating method such as gravure coating, reverse roll coating, wire bar coating, or die coating can be adopted.

When the coating layer is to be formed, after the resin composition for the coating layer is applied, the solvent is first subjected to predrying at a relatively low temperature to be volatilized, and then is subjected to main drying at a high temperature. By the procedure, a uniform film is obtained. The temperature of the predrying is preferably 80 to 110°C, more preferably 85 to 105°C, and further preferably 90 to 100°C. When the predrying temperature is lower than 80°C, the coating layer may be insufficiently dried. When the predrying temperature is higher than 110°C, drying may advance before the coating layer is wet-spread, which may result in poor appearance.

Meanwhile, the temperature of the main drying is preferably 110 to 140°C, more preferably 115 to 135°C, and further preferably 120 to 130°C. When the main drying temperature is lower than 110°C, formation of the coating layer does not advance and cohesive power and adhesiveness decrease, and as a result, barrier properties may also be adversely affected. When the main drying temperature exceeds 140°C, too much heat is applied to the film, whereby the film may become brittle or large wrinkles may be caused due to heat shrinkage.

The drying time of the predrying is preferably 3.0 to 10.0 seconds, more preferably 3.5 to 9.5 seconds, and further preferably 4.0 to 9.0 seconds. The drying time of the main drying is preferably 3.0 to 10.0 seconds, more preferably 3.5 to 9.5 seconds, and further preferably 4.0 to 9.0 seconds. However, the drying condition may also change due to the type of the heat medium or the intake and exhaust status of the drying oven. Separately from the drying, performing additional heat treatment in a temperature range as low as possible, specifically in a temperature range of 40 to 60°C, for 1 to 4 days is also further effective to advance the formation of the coating layer.

[Inorganic thin layer]

In the present invention, an inorganic thin layer (A) is provided on the surface of the substrate film in order to improve the gas barrier properties. The inorganic thin layer (A) is a thin film composed of a metal or an inorganic oxide. The material for forming the inorganic thin layer is not particularly limited as long as the material can be made into a thin film, and inorganic oxides such as silicon oxide (silica), aluminum oxide (alumina), and mixture of the silicon oxide and aluminum oxide are preferable from the viewpoint of gas barrier properties. The composite oxide of silicon oxide and aluminum oxide is particularly preferably from the viewpoint of the compatibility of the flexibility and the density of the thin layer. In the composite oxide, silicon oxide and aluminum oxide are preferably mixed at such a mixing ratio that the concentration of Al is within a range of 20 to 70 % by mass in terms of metal content by mass. When the concentration of Al is less than 20% by mass, the barrier properties against water vapor may be deteriorated. Meanwhile, when the concentration of Al exceeds 70% by mass, the inorganic thin layer tends to be harder, whereby the film may be broken during secondary processing such as printing or lamination to cause deteriorated gas barrier properties. The silicon oxide as used herein is various silicon oxides such as SiO and $SiO_2$, or a mixture thereof, and the aluminum oxide as used herein is various aluminum oxides such as AlO and $Al_2O_3$, or a mixture thereof.

The film thickness of the inorganic thin layer (A) is normally 1 to 100 nm, and preferably 5 to 50 nm. When the film thickness of the inorganic thin layer (A) is less than 1 nm, satisfactory gas barrier properties may be less likely to be obtained. Meanwhile, even if the film thickness exceeds 100 nm such that the inorganic thin layer is excessively thickened, the gas barrier properties-improving effect equivalent to such increase in the thickness cannot be obtained, and such a film thickness is rather disadvantageous in terms of flex resistance and production cost.

The method for forming the inorganic thin layer (A) is not particularly limited, and known vapor-deposition methods, for example, physical vapor-deposition methods (PVD methods) such as a vacuum vapor-deposition method, a sputtering method, and an ion plating method, or chemical vapor-deposition methods (CVD methods) may be adopted as appropriate. Hereinafter, a typical method for forming the inorganic thin layer (A) will be described by taking a silicon oxide-aluminum oxide thin film as an example. For example, in the ease of adopting a vacuum vapor-deposition method, a mixture of $SiO_2$ and $Al_2O_3$, or a mixture of $SiO_2$ and Al, or the like is preferably used as a vapor-deposition raw material. Normally, particles are used as these vapor-deposition raw materials. In the case, the size of each particle is desirably a size that does not change the pressure during vapor-deposition, and a preferable particle size is 1 mm to 5 mm. For heating, systems such as resistive heating, high frequency induction heating, electron beam heating, and laser heating can be adopted. It is also possible to adopt reactive vapor-deposition in which oxygen, nitrogen, hydrogen, argon, carbon dioxide gas, or water vapor or the like is introduced as a reaction gas or a means such as ozone addition or ion assist is used. Furthermore, film production conditions such as applying a bias to a body to be vapor-deposited (laminated film to be vapor-deposited) and heating or cooling the body to be vapor-deposited can also be optionally changed. Similarly, the vapor-deposition materials, the reaction gases, the application of a bias to the body to be vapor-deposited, and the heating/cooling and the like can be changed even when a sputtering method or a CVD method is adopted.

[Anchor coating layer for inorganic thin layer]

In the laminated body of the present invention, an anchor coating layer may be provided between the substrate film layer and the inorganic thin layer (A) for the purpose of securing gas barrier properties and lamination strength after retorting. Examples of the resin composition used for the anchor coating layer provided between the substrate film layer and the inorganic thin layer include compositions obtained by adding epoxy-based, isocyanate-based, melamine-based, oxazoline-based, and carbodiimide-based curing agents and the like to urethane-based, polyester-based, acryl-based, titanium-based, isocyanate-based, imine-based, and polybutadiene-based resins and the like. These resin compositions used for the anchor coating layer preferably contain a silane coupling agent having at least one or more organic functional groups in order to improve the adhesion to the inorganic layer.

The method for forming the anchor coating layer is not particularly limited, and, for example, conventionally known methods such as coating methods can be adopted. Examples of suitable methods among the coating methods include an off-line coating method and an in-line coating method. For example, in the case of an in-line coating method that is performed in a step of producing a substrate film layer, as conditions for drying and a heat treatment during coating, although depending on a coating thickness or conditions of an apparatus, it is preferable to send the substrate film to a stretching step in a perpendicular direction immediately after coating and to perform drying in a pre-heating zone or a stretching zone in the stretching step. In such a case, normally, the temperature is preferably set to about 50 to 250° C.

[Protective layer on inorganic thin layer]

In the present invention, a protective layer may be provided on the inorganic thin layer. The inorganic thin layer composed of the metal oxide is not a completely dense film, and has minute deficient portions dotted therein. By applying a specific resin composition for a protective layer described later onto the metal oxide layer to form a protective layer, a resin contained in the resin composition for a protective layer permeates the deficient portions of the metal oxide layer, which accordingly provides an effect of stabilizing the gas barrier properties. In addition, by using a material having gas barrier properties also for the protective layer itself, the gas barrier performance of the laminated film may also be significantly improved.

In the present invention, the adhesion amount of the protective layer is preferably 0.10 to 0.40 $(g/m^2)$. This makes it possible to uniformly control the coating layer, resulting the protective layer having uniform coating and less defects. The cohesive force inside the protective layer is improved, and the adhesion between the respective layers of the protective layer-inorganic thin film layer is also improved. The adhesion amount of the protective layer is preferably 0.13 $(g/m^2)$ or more, more preferably 0.16 $(g/m^2)$ or more, and still more preferably 0.19 $(g/m^2)$ or more, and preferably 0.37 $(g/m^2)$ or less, more preferably 0.34 $(g/m^2)$ or less, and still more preferably 0.31 $(g/m^2)$ or less. If the adhesion amount of the protective layer exceeds 0.400 $(g/m^2)$, the cohesive force inside the protective layer becomes insufficient even if the gas barrier properties are improved. Since the uniformity of the protective layer is also deteriorated, ununiform coating and defects occur, whereby the gas barrier properties and the adhesive properties cannot be exhibited sufficiently. Meanwhile, if the adhesion amount of the protective layer is less than 0.10 $(g/m^2)$, sufficient gas barrier properties and interlayer adhesion may not be obtained.

In the laminated body of the present invention, examples of the resin composition used for the protective layer provided on the surface of the inorganic thin layer include compositions obtained by adding epoxy-based, isocyanate-based, melamine-based curing agents and the like to urethane-based, polyester-based, acryl-based, titanium-based, isocyanate-based, imine-based, and polybutadiene-based resins and the like.

The coating method of the resin composition for the protective layer is not particularly limited as long as it is a method of coating the film surface to form the protective layer. For example, normal coating methods such as gravure coating, reverse roll coating, wire bar coating, and die coating can be employed.

When the protective layer is formed, it is preferable to apply the resin composition for a protective layer and then heat and dry the resin composition. The drying temperature is preferably 100 to 160° C., more preferably 110 to 150° C., and still more preferably 120 to 140° C. If the drying temperature is lower than 100° C., insufficient drying may occur in the protective layer, or the formation of the protective layer does not proceed, whereby a cohesive force and water-resistant adhesiveness may be deteriorated, resulting in deterioration in barrier properties and hand tearability. Meanwhile, if the drying temperature exceeds 160° C., heat is excessively applied to the film, whereby the film may become brittle to cause a decreased puncture strength, or the film may shrink to cause deteriorated processability. If the solvent in the protective film is first volatilized under relatively low temperature conditions of 90° C to 110° C immediately after coating, and the protective film is then dried at 130° C or higher, a uniform film can be obtained, which is particularly preferable. In addition to drying, it is also more effective to perform additional heat treatment in a low temperature range as much as possible in order to advance the formation of the protective layer.

[Heat sealable layer containing resin]

When the laminated film of the present invention is used as a packaging material, the laminated film needs to be made into a layered body in which a heat sealable layer containing a resin is formed called a sealant. The heat sealable layer containing a resin is ordinarily formed through an extrusion lamination method or a dry lamination method. A thermoplastic polymer for forming the heat sealable layer containing a resin only has to be one that can sufficiently exhibit sealant adhesiveness, and it is possible to use a polyethylene resin such as an olefin HDPE, LDPE, or LLDPE; a polypropylene resin; an ethylene-vinyl acetate copolymer; an ethylene-$\alpha$-olefin random copolymer; an ionomer resin; or the like. Among these, LLDPE or a polypropylene resin having high versatility is particularly preferable from the viewpoint of durability, sealing strength, price, and mono-materialization. The thickness of the sealant layer is preferably 20 to 80 $\mu$m, further preferably 25 to 75 $\mu$m, and more preferably 30 to 70 $\mu$m. When the thickness is smaller than 20 $\mu$m, sufficient sealing strength may be less likely to be obtained, and the sealant layer may have less stiffness, making it difficult to handle. Meanwhile, when the thickness exceeds 80 $\mu$m, stiffness becomes strong, which may result in decreased handleability as a bag, and sealing at a higher temperature is required, which may result in heat wrinkles on the substrate film on the front side. In addition, a cost increases in some cases.

[Adhesive layer]

For the adhesive layer used in the present invention, a general adhesive for lamination can be used. For example, it is possible to use solvent (free) type, aqueous type, and hot melt type adhesives containing poly(ester) urethane-based, polyester-based, polyamide-based, epoxy-based, poly(meth)acrylic-based, polyethyleneimine-based, ethylene-(meth)acrylic acid-based, polyvinyl acetate-based, (modified) polyolefin-based, polybutadiene-based, wax-based, and casein-based materials and the like as a main component. Among them, a urethane-based or polyester-based material is preferable in consideration of heat resistance and flexibility that can follow the dimensional changes of each substrate. As a method for laminating the adhesive layer, for example, the adhesive layer can be coated by a direct gravure coating method, a reverse gravure coating method, a kiss coating method, a die coating method, a roll coating method, a dip coating method, a knife coating method, a spray coating method, a fountain coating method, and other methods. The coated amount after drying is preferably 1 to 8 g/m$^2$ in order to exhibit sufficient adhesiveness. The coated amount is more preferably 2 to 7 g/m$^2$, and still more preferably 3 to 6 g/m$^2$. If the coated amount is less than 1 g/m$^2$, it is difficult to bond the film on the entire surface, whereby the adhesive force decreases. If the coated amount is more than 8 g/m$^2$ or more, it takes time to completely cure the film, and unreacted substances are apt to remain, whereby the adhesive force decreases.

Furthermore, in the laminated film of the present invention, at least one or more printed layers may be laminated between the substrate film and the heat sealable layer containing a resin, or on the outer side thereof.

As a printing ink for forming the printed layer, an aqueous or solvent-based resincontaining printing ink can be preferably used. Herein, examples of a resin used in the printing ink include an acrylic resin, a urethane-based resin, a polyester-based resin, a vinyl chloridebased resin, a vinyl acetate copolymer resin, and mixtures thereof. The printing ink may contain known additives such as an anti-static agent, a light blocking agent, an ultraviolet absorber, a plasticizer, a lubricant, a filler, a coloring agent, a stabilizer, a lubricant, an antifoaming agent, a cross-linking agent, an anti-blocking agent, and an antioxidant. The printing method of forming the printed layer is not particularly limited, and known methods such as an offset printing method, a gravure printing method, and a screen printing method may be used. For drying the solvent after printing, known drying methods such as hot wind drying, hot roll drying, and infrared drying may be used.

[Characteristic of laminated body]

The laminated body of the present invention has oxygen permeability of 20 ml/m$^2\cdot$d$\cdot$MPa or less under conditions of 23° C and 65% RH from the viewpoint of exhibiting good gas barrier properties. Furthermore, by laminating the barrier layer on each film, the oxygen permeability can be set to preferably 18 ml/m$^2$ ·d·MPa or less, and more preferably 16 ml/m$^2\cdot$ d·MPa or less. The oxygen permeability exceeding 20 ml/m$^2$ ·d·MPa makes it difficult to cope with applications requiring high gas barrier properties. Meanwhile, if the oxygen permeability is less than 0.5 ml/m$^2$ ·d·MPa in any case, the barrier performance is excellent, but a residual solvent is less likely to outwardly permeate the bag, whereby the amount of the residual solvent transferred to the contents may relatively increase, which is not preferable. The lower limit of the oxygen permeability is preferably 0.5 ml/m$^2$ ·d·MPa or more.

The laminated body of the present invention has water vapor permeability of 2.0 g/m$^2$ ·d or less under conditions of 40° C and 90% RH from the viewpoint of exhibiting good gas barrier properties. Furthermore, by laminating the barrier layer on each film, the water vapor permeability can be set to preferably 1.8 g/m$^2$ ·d or less, and more preferably 1.6 g/m$^2$ ·d or less. The water vapor permeability exceeding 2.0 g/m$^2$ ·d makes it difficult to cope with applications requiring high gas barrier properties. Meanwhile, if the water vapor permeability is less than 0.1 g/m$^2$ ·d in any case, the barrier performance is excellent, but a residual solvent is less likely to outwardly permeate the bag, whereby the amount of the residual solvent transferred to the contents may relatively increase, which is not preferable. The lower limit of the water vapor permeability is preferably 0.1 g/m$^2$ ·d or more.

The laminated body of the present invention preferably has piercing strength of 15 N or more, more preferably 16 N or more, and still more preferably 17N or more as measured according to JIS Z1707. If the piercing strength is less than 15 N, in the case where the laminated body is used as a bag, the bag is pierced with a hole due to an external load in a state containing weight, whereby the contents may leak.

The laminated body of the present invention in which the heat sealable layer is sealed at one end and another end under conditions of a temperature of 160°C, a sealing bar pressure of 0.2 MPa for a sealing time of 2 seconds preferably has heat seal strength of 15 N/15 mm or larger. When the heat seal strength is smaller than 15 N/15 mm, the sealed portion is likely to be peeled, and thus, the laminated body cannot be used in such an application for a large amount of contents, whereby applications as a packaging bag are limited. The heat seal strength is preferably 16 N/15 mm or larger and more preferably 17 N/15 mm or larger.

The laminated body of the present invention has a heat shrinkage rate of 1.8% or lower at 120°C for 5 minutes in the MD direction and the TD direction of the substrate film. When the heat shrinkage rate is in this range, appearance of the sealed portion when the laminated body is subjected to sealing processing improves. The heat shrinkage rate at 120°C for 5 minutes is preferably 1.7% or lower, more preferably 1.6% or lower, and further preferably 1.5% or lower. When the heat shrinkage rate exceeds 1.8%, wrinkles due to heat are likely to occur during the sealing processing, and thus quality at the seal surface may decrease.

The laminated body of the present invention in which two stretched substrate films containing a polypropylene resin as a raw material are attached together can be expected to improve toughness and gas barrier performance. In terms of toughness, since two stretched polypropylene films having generally a property of large piercing strength are used, it is possible to design a packaging member as good as two different materials of PET and nylon films which are widely used for a packaging member. In terms of gas barrier property, since two substrate films are used, the film at the intermediate position is less likely to be subjected to influence of the external environment, e.g., influence of temperature and humidity, external bending, and the like. Accordingly, more stable gas barrier performance can be exhibited. Therefore, it is particularly preferable that the coating layer or the inorganic thin film layer having gas barrier performance is stacked on the intermediate film.

The laminated body of the present invention preferably has piercing strength of 15 N or larger. When the piercing strength is set to be in this range, it is possible to obtain toughness equivalent to that of a laminated body containing different materials of PET and nylon films which are generally used. The piercing strength is preferably 16 N or larger, more preferably 17 N or larger, and further preferably 18 N or larger. When the piercing strength is smaller than 15 N, strength as a bag is insufficient, which may cause a pinhole or the like at a protruding portion or a bent portion.

As an evaluation criterion for mono-materialization in the laminated body of the present invention, when calculation is performed while the ratio of the thickness of the olefin material relative to the total thickness of the films and adhesive layer is defined as a mono-material ratio, the mono-material ratio is preferably 85% or higher, more preferably 87.5% or more, and further preferably 90% or more. When the mono-material ratio is set to be in this range, the laminated body can be a packaging member to be easily recycled. When the mono-material ratio is lower than 85%, recycling may become difficult due to foreign matters derived from different materials.

In the laminated body of the present invention, the total thickness of the films and adhesive layer is preferably 50 to 140 μm, more preferably 55 to 135 μm, and further preferably 60 to 130 μm. When the total thickness of the laminated body is set to be in this range, a packaging body that can exhibit necessary physical properties such as piercing strength and barrier performance can be obtained. When the total thickness is smaller than 50 μm, toughness as a bag is insufficient, and the bag may be broken or a hole may be formed therein. Meanwhile, when the total thickness exceeds 140 μm, stiffness becomes strong, leading to poor handling and increased cost for a packaging body, which is also not economically preferable.

EXAMPLES

Hereinafter, the present invention will be described in more detail by Examples and is not limited to the examples described below. Evaluations of the film were performed by the following measurement methods.

(1) Thicknesses of films

The thicknesses of films were measured in accordance with JIS K7130-1999 A method using a dial gauge.

(2) Composition and film thickness of inorganic thin layer

For laminated films (after lamination of inorganic thin films) obtained in Examples and Comparative Examples, thicknesses and compositions of films were measured by a calibration curve prepared in advance using an X-ray fluorescence analyzer ("ZSX100e" manufactured by Rigaku Corporation). The conditions of an excited X-ray tube were 50 kV and 70 mA.

(3) Adhesion amount of coating layer

In each of Examples and Comparative Examples, each laminated film obtained by laminating an inorganic thin layer or a coating layer on a substrate film was used as a sample. A test piece of 100 mm×100 mm was cut out from this sample. A coating layer was wiped with ethanol. From a change in the mass of the film before and after wiping, the adhesion amount of the coating layer was calculated.

(4) Evaluation of heat shrinkage rate of substrate film at 150°C for 5 minutes

In each Example and Comparative Example, a test piece having a width of 20 mm and a length of 300 mm was prepared such that the measurement direction (MD or TD) of the prepared substrate film was the long side direction, and gauge marks were marked at a distance of 200 mm in a center portion of the test piece. Then, the distance between the gauge marks was read by a metal ruler to the first decimal place, and a gauge distance A before heating was obtained. Then, an end portion of this test piece was sandwiched by a clip, and was placed in a state of being hung on a metal bar in a heating oven heat-regulated to 150°C±1°C for 5 minutes. After the heating, the gauge distance of the taken out test piece was read by a metal ruler as before the heating, and a gauge distance B after the heating was obtained. A heat shrinkage rate was obtained by the calculation formula below, based on the obtained values.

$$\text{Heat shrinkage rate (\%)} = (A-B)/A \times 100$$

[Production of laminated body]

(5) Production of laminated body for evaluation

In case where one substrate film was used, after a polyurethane adhesive (manufactured by Toyo-Morton, Ltd., TM569/cat10L) was applied on each of the substrate films of Examples and Comparative Examples such that the thickness after drying treatment at 80°C became 3 μm, an unstretched polypropylene film (manufactured by TOYOBO CO., LTD., P1128; thickness of 30 μm; referred to as CPP) as a heat sealable resin was dry-laminated on a metal roll heated to 60°C, and then the resultant laminated body was subjected to aging at 40°C for 4 days, whereby a laminated body for evaluation was obtained.

Meanwhile, in case where two substrate films were used, after a polyurethane adhesive (manufactured by Toyo-Morton, Ltd., TM569/cat10L) was applied on each of the substrate films of Examples and Comparative Examples such that the thickness after drying treatment at 80°C became 3 μm, another substrate film was dry-laminated on a metal roll heated to 60°C, and the resultant laminated body was wound into a roll. After the same adhesive was applied on this roll such that the thickness after drying treatment at 80°C became 3 μm, an unstretched polypropylene film (manufactured by TOYOBO CO., LTD., P1128; thickness of 30 μm; referred to as CPP) as a heat-sealable resin was dry-laminated on a metal roll heated to 60°C, and then the resultant laminated body was subjected to aging at 40°C for 4 days, whereby a laminated body for evaluation was obtained.

(6) Method for evaluating oxygen permeability of laminated body

The oxygen permeability of the laminated body produced in the above (5) was measured in an atmosphere of a temperature of 23° C and a humidity of 65% RH using an oxygen permeability measurement apparatus ("OX-TRAN (registered trademark) 2/22" manufactured by MOCON) in accordance with JIS-K7126 B method. The oxygen permeability was measured in a direction in which oxygen permeated from the substrate film side to the heat sealable layer containing a resin side of the laminated body.

(7) Method for evaluating water vapor permeability of laminated body

The water vapor permeability of the laminated body produced in the above (5) was measured in an atmosphere of a temperature of 40° C and a humidity of 90% RH using a water vapor permeability measurement apparatus ("PERMATRAN-W (registered trademark) 3/33MG" manufactured by MOCON) in accordance with JIS-K7129 B method. The water vapor permeability was measured in a direction in which water vapor permeated from the heat sealable layer containing a resin side to the substrate film side of the laminated body.

(8) Method for evaluating heat seal strength of laminated body

The heat seal strength of the laminated body produced in the above (5) was measured in accordance with JIS Z1707. The concrete procedures were as follows. The heat seal side of the sample was adhered each other with a heat sealer. Heat seal conditions were an upper bar temperature of 160 °C, a lower bar temperature of 30 °C, a pressure of 0.2MPa, and a time of two seconds. Adhered sample was cut to have a sealed width of 15 mm. Then, pealing strength of the sample was measured with at a drawing speed of 200 mm/minute using a universal tensile testing machine "DSS-100" manufactured by Shimadzu Corporation. Pealing strength was shown as strength per 15 mm (N/15mm). Appearance of seal side was relatively evaluated as follows. Good: no wrinkle was found in sealed sample, Fair: a little wrinkle was found in sealed sample, and Poor: wrinkle was found throughout sealed sample.

(9) Method for evaluating piercing strength of laminated body

The laminated body produced in the above (5) was cut to have a 5 cm square to obtain a sample. Piercing strength of the sample was measured according to JIS Z1707 using a digital force gauge "ZTS-500N", a motorized test stand "MX2-500N", and a puncture jig "TKS-250N", all of which was manufactured by IMADA Co., Ltd.

(10) Method for evaluating heat shrinkage rate at 120°C for 5 minutes of laminated body

A test piece having a width of 20 mm and a length of 300 mm was prepared such that the measurement direction (the MD or TD direction of the attached substrate film) of the laminated body produced in (5) above was the long side direction, and gauge marks are marked at a distance of 200 mm in a center portion of the test piece. Then, the distance between the gauge marks was read by a metal ruler to the first decimal place, and a gauge distance A before heating was obtained. Then, an end portion of this test piece was sandwiched by a clip, and was placed in a state of being hung on a metal bar in a heating oven heat-regulated to 120°C±1°C for 5 minutes. After the heating, the gauge distance of the taken out test piece was read by a metal ruler as before the heating, and a gauge distance B after the heating was obtained. A heat shrinkage rate was obtained by the calculation formula below, based on the obtained values.

$$\text{Heat shrinkage rate (\%)} = (A-B)/A \times 100$$

(11) Evaluation criterion for mono-materialization: mono-material ratio

With respect to the laminated body produced in (5) above, as an evaluation criterion for mono-materialization, the ratio of the thickness of the olefin material relative to the total thickness of the films and adhesive layer was defined as a mono-material ratio, and was calculated.

(12) Evaluation criterion for visibility-range suitability

With respect to the laminated body produced in (5) above, as an evaluation criterion for visibility-range suitability, a laminated body that was transparent was defined to be good.
Stretched substrate films used in Examples and Comparative Examples will be described below. These films were used in Examples 1 to 6 and Comparative Examples 1 to 7, and are shown in Table 1.

[Production of substrate film]

Details of the polypropylene resin raw materials used in production of the polyolefin substrate films below, film forming conditions, and raw material blending ratios are shown in Tables 1 to 4.

[Table 1]

| Polypropylene resin | PP-1 | PP-2 | PP-3 |
|---|---|---|---|
| Raw material monomer | Propylene | Propylene | Propylene |

(continued)

| Polypropylene resin | PP-1 | PP-2 | PP-3 |
|---|---|---|---|
| Resin stereoregularity (mesopentad fraction (%)) | 98.7 | 98.9 | 98.4 |
| MFR (g/10 minutes, 230°C, 2.16 kgf) | 7.6 | 1.9 | 3.0 |
| Molecular weight (Mn) | 67,500 | 80,000 | 79,400 |
| Molecular weight (Mw) | 270,000 | 360,000 | 312,000 |
| Molecular weight distribution (Mw/Mn) | 4.0 | 4.5 | 3.9 |
| DSC melting peak temperature (°C) | 168.0 | 163.3 | 163.9 |
| DSC melting peak area (J/g) | 105.2 | 94.3 | 98.6 |

[Table 2]

| Masterbatch | A |
|---|---|
| Product name of masterbatch | FTX0627G |
| Anti-blocking agent in masterbatch | Silica particles |
| Average particle diameter of anti-blocking agent ($\mu$m) | 2.7 |
| Anti-blocking agent content in masterbatch (wt.ppm) | 50000 |
| MFR of polypropylene resin in masterbatch (g/10 minutes, 230°C, 2.16 kgf) | 3.0 |

[Table 3]

| Film forming condition | a | b |
|---|---|---|
| Melted resin temperature (°C) | 250 | 250 |
| Cooling roll temperature (°C) | 30 | 30 |
| Longitudinal direction stretch ratio (times) | 4.5 | 4.5 |
| Longitudinal direction stretching temperature (°C) | 135 | 125 |
| Width direction stretch ratio (times) | 8.2 | 8.2 |
| Width direction stretch preheating temperature (°C) | 173 | 168 |
| Width direction stretching temperature (°C) | 164 | 155 |
| Heat-setting temperature (°C) | 171 | 165 |
| Width direction relaxation rate (%) | 6.7 | 6.7 |

[Table 4]

| | | | | OPP-1 | OPP-2 |
|---|---|---|---|---|---|
| Substrate layer (A) | Raw material | PP-1 | wt% | 100.00 | 0.00 |
| | | PP-2 | wt% | 0.00 | 40.00 |
| | | PP-3 | wt% | 0.00 | 60.00 |
| | | Thickness | $\mu$m | 18 | 18 |

(continued)

| | | | | | OPP-1 | OPP-2 |
|---|---|---|---|---|---|---|
| Surface layer (B) | Raw material | | PP-1 | wt% | 96.4 | 0.0 |
| | | | PP-2 | wt% | 0.0 | 0.0 |
| | | | PP-3 | wt% | 0.0 | 96.4 |
| | | | Anti-blocking-agent-containing masterbatch | wt% | 3.6 | 3.6 |
| | | | Masterbatch type | - | A | A |
| | Thickness | | | μm | 1.0 | 1.0 |
| | Surface treatment | | | | Corona treatment | Corona treatment |
| Surface layer (C) | Raw material | | PP-1 | wt% | 94.0 | 0.0 |
| | | | PP-2 | wt% | 0.0 | 0.0 |
| | | | PP-3 | wt% | 0.0 | 94.0 |
| | | | Anti-blocking-agent-containing masterbatch | wt% | 6.0 | 6.0 |
| | | | Masterbatch type | - | A | A |
| | Thickness | | | μm | 1.0 | 1.0 |
| | Surface treatment | | | | Without treatment | Without treatment |
| Blending amount in film | | | PP-1 | wt% | 99.52 | 0.00 |
| | | | PP-2 | wt% | 0.00 | 36.00 |
| | | | PP-3 | wt% | 0.00 | 63.52 |
| | | | Anti-blocking-agent-containing masterbatch | wt% | 0.48 | 0.48 |
| | | | Anti-blocking agent content | ppm | 240 | 240 |
| Film forming condition (see Table 3) | | | | | a | b |

(OPP-1)

As the substrate layer (A), the polypropylene homopolymer PP-1 shown in Table 1 was used.

As the surface layer (B), a mixture obtained by blending, in proportions, 96.4 wt% of the polypropylene homopolymer PP-1 shown in Table 1 and 3.6 wt% of the masterbatch A shown in Table 2, was used.

As the surface layer (C), a mixture obtained by blending, in proportions, 94.0 wt% of the polypropylene homopolymer PP-1 shown in Table 1 and 6.0 wt% of the masterbatch A shown in Table 2, was used.

Using a 45 mm extruder for the substrate layer (A), a 25 mm extruder for the surface layer (B), and a 20 mm extruder for the surface layer (C), the raw material resins were each melted at 250°C, co-extruded from a T-die into a sheet shape, and cooled and solidified such that the surface layer (B) was in contact with a cooling roll at 30°C, and then, the resultant film was stretched 4.5 times in the longitudinal direction (MD) at 135°C. Next, in a tenter, both ends of the film in the film width direction (TD) were sandwiched by clips, the film was preheated at 173°C, then, was stretched 8.2 times in the width direction (TD) at 164°C, and was heat-set at 171°C while being relaxed by 6.7% in the width direction (TD). The film forming condition at this time was defined as a film forming condition a. Details of the present film forming condition are shown in Table 3.

In this manner, a biaxially stretched polypropylene film having a configuration of the surface layer (B)/the substrate layer (A)/the surface layer (C) was obtained.

The surface of the surface layer (B) of the biaxially stretched polypropylene film was subjected to corona treatment under a condition of an applied current value of 0.75 A, with use of a corona treatment machine manufactured by Softal Corona & Plasma GmbH, and then, the resultant film was wound by a winder. The thickness of the obtained film was 20 μm (the thicknesses of the surface layer (B)/the substrate layer (A)/the surface layer (C) were 1.0 μm/18.0 μm/1.0 μm). Details of the present configuration are shown in Table 4.

(OPP-2)

As the substrate layer (A), 40.0 wt% of the polypropylene homopolymer PP-2 shown in Table 1, and 60.0 wt% of the polypropylene homopolymer PP-3 shown in Table 1 were used.

As the surface layer (B), a mixture obtained by blending, in proportions, 96.4 wt% of the polypropylene homopolymer PP-3 shown in Table 1 and 3.6 wt% of the masterbatch A shown in Table 2, was used.

As the surface layer (C), a mixture obtained by blending, in proportions, 94.0 wt% of the polypropylene homopolymer PP-3 shown in Table 1 and 6.0 wt% of the masterbatch A shown in Table 2, was used.

Using a 45 mm extruder for the substrate layer (A), a 25 mm extruder for the surface layer (B), and a 20 mm extruder for the surface layer (C), the raw material resins were each melted at 250°C, co-extruded from a T-die into a sheet shape, and cooled and solidified such that the surface layer (B) was in contact with a cooling roll at 30°C, and then, the resultant film was stretched 4.5 times in the longitudinal direction (MD) at 125°C. Next, in a tenter, both ends of the film in the film width direction (TD) were sandwiched by clips, the film was preheated at 168°C, then, was stretched 8.2 times in the width direction (TD) at 155°C, and was heat-set at 165°C while being relaxed by 6.7% in the width direction (TD). The film forming condition at this time was defined as a film forming condition b. Details of the present film forming condition are shown in Table 3.

In this manner, a biaxially stretched polypropylene film having a configuration of the surface layer (B)/the substrate layer (A)/the surface layer (C) was obtained.

The surface of the surface layer (B) of the biaxially stretched polypropylene film was subjected to corona treatment under a condition of an applied current value of 0.75 A, with use of a corona treatment machine manufactured by Softal Corona & Plasma GmbH, and then, the resultant film was wound by a winder. The thickness of the obtained film was 20 μm (the thicknesses of the surface layer (B)/the substrate layer (A)/the surface layer (C) were 1.0 μm/18.0 μm/1.0 μm). Details of the present configuration are shown in Table 4.

Details of coating liquids for forming the coating layer used in Examples and Comparative Examples are shown below. These were used in Examples 1 to 6 and Comparative Examples 1 to 7, and are shown in Table 5.

[Polyvinyl alcohol resin (A)]

10 parts by mass of a completely saponified polyvinyl alcohol resin (manufactured by The Nippon Synthetic Chemical Industry Co., Ltd., product name: G polymer OKS8049Q, (saponification degree: 99.0% or higher, average degree of polymerization: 450)) was added to 90 parts by mass of purified water, and the resultant matter was heated to 80°C while being stirred, and then, was stirred for about 1 hour. Then, the resultant matter was cooled to normal temperature, whereby a substantially transparent polyvinyl alcohol solution (PVA solution) having a solid component of 10% was obtained.

[Inorganic layer compound dispersion liquid (B)]

5 parts by mass of montmorillonite (product name: KUNIPIA F, manufactured by KUNIMINE INDUSTRIES CO., LTD.) being an inorganic layer compound was added into 95 parts by mass of purified water while being stirred, and then was sufficiently dispersed in a homogenizer set at 1500 rpm. Then, the temperature was kept at 23°C for 1 day, and an inorganic layer compound dispersion liquid having a solid component of 5% was obtained.

[Coating liquid 1 used in coating layer]

Each material was mixed at the blending ratio below to prepare a coating liquid (resin composition for the coating layer).

| | |
|---|---|
| ion exchanged water | 15.00 mass% |
| isopropyl alcohol | 15.00 mass% |
| the polyvinyl alcohol resin (A) | 30.00 mass% |
| the inorganic layer compound dispersion liquid (B) | 40.00 mass% |

[Coating liquid 2 used in coating layer]

Each material was mixed at the blending ratio below to prepare a coating liquid (resin composition for the coating layer).

| | |
|---|---|
| ion exchanged water | 15.00 mass% |
| isopropyl alcohol | 15.00 mass% |
| the polyvinyl alcohol resin (A) | 70.00 mass% |

[Coating liquid 3 used in coating layer]

The materials below were mixed at the mass ratio shown below, and the mixture was stirred for 30 minutes or longer to be dissolved. Next, a filter having a nominal filtration accuracy of 50 $\mu$m was used to remove undissolved substances, to prepare a coating liquid (resin composition for the coating layer).

| | |
|---|---|
| ion exchanged water | 37.50 mass% |
| polyvinylidene chloride resin (C) | 62.50 mass% |

(manufactured by Asahi Kasei Chemicals Corporation, SARAN LATEX L557, solid component ratio: 48%)

(Coating of coating liquid on film (stacking of coating layer))

Using a gravure roll coating method, the above prepared coating liquid was applied on a corona-treated face of the substrate film or an inorganic thin film layer of an inorganic thin film described later, and the resultant matter was subjected to predrying at 90°C for 4 seconds, and then, subjected to main drying at 120°C for 4 seconds, to obtain a coating layer. Then, the resultant matter was subjected to post-heat treatment at 40°C for 2 days. In this manner, a layered film provided with a coating layer was produced.

Methods of producing inorganic thin layers (A) used in each of Examples and Comparative Examples are shown as follows. These were used in Examples 1 to 6 and Comparative Examples 1 to 7 as shown in Table 5.

(Formation of inorganic thin layer A-1)

As an inorganic thin layer A-1, aluminum oxide was vapor-deposited on the substrate film. In the method of vapor-depositing aluminum oxide on the substrate film, a film is set on the unwinding side of a continuous type vacuum vapor-deposition apparatus, caused to travel via a cooling metal drum, and wound. At this time, the pressure of the continuous type vacuum vapor-deposition apparatus was reduced to $10^{-4}$ Torr or less. Metal aluminum having a purity of 99.99% was loaded in a crucible made of alumina from the lower portion of the cooling drum. The metal aluminum was heated and evaporated. While oxygen was supplied into the vapor to perform an oxidization reaction, aluminum oxide was deposited onto the film to form an aluminum oxide film having a thickness of 10 nm.

(Formation of inorganic thin Layer A-2)

As an inorganic thin layer A-2, a composite oxide layer of silicon dioxide and aluminum oxide was formed on a substrate film by an electron beam vapor-deposition method. Particulate $SiO_2$ (purity: 99.9%) and $Al_2O_3$ (purity: 99.9%) having a size of about 3 mm to 5 mm were used as a vapor-deposition source. The film thickness of the inorganic thin layer ($SiO_2/Al_2O_3$ composite oxide layer) in the film (inorganic thin layer/coating layer-containing film) obtained as described above was 13 nm. The composition of the composite oxide layer was $SiO_2/Al_2O_3$ (mass ratio) = 60/40.

As described above, laminated films including the coating layer or the inorganic thin layer on the substrate film was produced.

In each of Examples and Comparative Examples, laminated bodies having constituents described in Table 5 were prepared by laminating each laminated films with the above adhesives using a dry laminating method. In Comparative Examples, a vapor-deposited transparent polyester film (manufactured by TOYOBO CO., LTD, VE-100, 12 $\mu$m, referred to as vapor-deposited PET), and a biaxially stretched polyamide film (TOYOBO CO., LTD, N1100, 15 $\mu$m, referred to as NY) were used as substrate films. In addition, an aluminum deposited and unstretched polypropylene film (manufactured by TORAY ADVANCED FILM CO., LTD, 2703, 25 $\mu$m, referred to as VM-CPP) was used as a heat seal layer containing a resin. Then, the laminated bodies were produced from the obtained laminated films were subjected to each the above evaluations. The results are shown in Table 5.

[Table 5A]

Laminate configuration

| | (1) Substrate film (first sheet) | | | | Heat shrinkage rate at 150°C×5 minutes [%] | | (2) Substrate film (second sheet) | | | | Heat shrinkage rate at 150°C×5 minutes [%] | | (3) Heat sealable layer containing resin | | Films used [number of sheets] | Number of barrier layers | Total thickness of adhesive layer [μm] | Total thickness [μm] |
|---|---|---|---|---|---|---|---|---|---|---|---|---|---|---|---|---|---|---|
| | Resin type | Thickness [μm] | Inorganic thin layer (A) Type | Coating layer Type | MD direction | TD direction | Resin type | Thickness [μm] | Inorganic thin layer (A) Type | Coating layer Type | MD direction | TD direction | Resin type | Thickness [μm] | | | | |
| Example 1 | OPP-1 | 20 | - | Coating liquid 1 | 4.5 | 5.7 | OPP-1 | 20 | - | Coating liquid 1 | 4.5 | 5.7 | CPP | 30 | 3 | 2 | 6 | 76 |
| Example 2 | OPP-1 | 20 | - | - | 4.5 | 5.7 | OPP-1 | 20 | A-2 | Coating liquid 1 | 4.5 | 5.7 | CPP | 30 | 3 | 2 | 6 | 76 |
| Example 3 | OPP-1 | 20 | A-1 | - | 4.5 | 5.7 | OPP-1 | 20 | - | Coating liquid 1 | 4.5 | 5.7 | CPP | 30 | 3 | 2 | 6 | 76 |
| Example 4 | OPP-1 | 20 | - | Coating liquid 1 | 11.5 | 20.0 | OPP-2 | 20 | - | Coating liquid 1 | 4.5 | 5.7 | CPP | 30 | 3 | 2 | 6 | 76 |
| Example 5 | OPP-2 | 20 | - | Coating liquid 1 | 4.5 | 5.7 | OPP-1 | 20 | - | Coating liquid 1 | 11.5 | 20.0 | CPP | 30 | 3 | 2 | 6 | 76 |
| Example 6 | OPP-1 | 20 | - | Coating liquid 1 | 4.5 | 5.7 | OPP-2 | 20 | - | - | 11.5 | 20.0 | CPP | 30 | 3 | 1 | 6 | 76 |
| Comparative Example 1 | OPP-2 | 20 | - | Coating liquid 3 | 11.5 | 20.0 | OPP-2 | 20 | - | Coating liquid 3 | 11.5 | 20.0 | CPP | 30 | 3 | 2 | 6 | 76 |
| Comparative Example 2 | Vapor-deposited PET | 12 | - | - | 1 | -0.2 | OPP-1 | 20 | - | - | 4.5 | 5.7 | CPP | 30 | 3 | 1 | 6 | 68 |

(continued)

| | Laminate configuration | | | | | | | | | | | | | | | | | |
| | (1) Substrate film (first sheet) | | | | | | (2) Substrate film (second sheet) | | | | | | (3) Heat sealable layer containing resin | | Films used [number of sheets] | Number of barrier layers | Total thickness of adhesive layer [μm] | Total thickness [μm] |
| | Resin type | Thickness [μm] | Inorganic thin layer (A) | Coating layer | Heat shrinkage rate at 150°C×5 minutes [%] | | Resin type | Thickness [μm] | Inorganic thin layer (A) | Coating layer | Heat shrinkage rate at 150°C×5 minutes [%] | | Resin type | Thickness [μm] | | | | |
| | | | Type | Type | MD direction | TD direction | | | Type | Type | MD direction | TD direction | | | | | | |
| Comparative Example 3 | OPP-1 | 20 | - | Coating liquid 1 | 4.5 | 5.7 | - | - | | - | - | - | CPP | 30 | 2 | 1 | 3 | 53 |
| Comparative Example 4 | OPP-2 | 20 | - | Coating liquid 1 | 11.5 | 20.0 | OPP-2 | 20 | | Coating liquid 1 | 11.5 | 20.0 | CPP | 30 | 3 | 2 | 6 | 76 |
| Comparative Example 5 | OPP-2 | 20 | - | Coating liquid 2 | 11.5 | 20.0 | OPP-2 | 20 | | Coating liquid 2 | 11.5 | 20.0 | CPP | 30 | 3 | 2 | 6 | 76 |
| Comparative Example 6 | OPP-1 | 20 | - | Coating liquid 1 | 4.5 | 5.7 | OPP-1 | 20 | - | Coating liquid 1 | 4.5 | 5.7 | VM-CPP | 25 | 3 | 3 | 6 | 71 |
| Comparative Example 7 | Vapor-deposited PET | 12 | - | - | 1.0 | -0.2 | NY | 15 | - | - | 0.8 | 0.7 | CPP | 30 | 3 | 1 | 6 | 63 |

EP 4 400 308 A1

19

[Table 5B]

| | Laminated body evaluation item | | | | | | | | |
| --- | --- | --- | --- | --- | --- | --- | --- | --- | --- |
| | OTR [ml/m$^2$·d·MPa] | WVTR [g/m$^2$·d] | Piercing strength [N] | 160°C sealing strength [N/15 mm] | | Mono-material ratio [%] | Visibility-range suitability | Heat shrinkage rate at 120°C×5 minutes [%] | |
| | | | | Appearance | Measurement value | | | MD direction | TD direction |
| Example 1 | 5 | 1.0 | 18 | Good | 20 | 92 | Good | 0.8 | 0.3 |
| Example 2 | 4 | 1.2 | 17 | Good | 18 | 92 | Good | 0.7 | 0.4 |
| Example 3 | 12 | 1.4 | 17 | Good | 19 | 92 | Good | 0.6 | 0.4 |
| Example 4 | 5 | 1.4 | 18 | Good | 22 | 92 | Good | 0.7 | 0.4 |
| Example 5 | 5 | 1.1 | 18 | Good | 21 | 92 | Good | 0.7 | 0.5 |
| Example 6 | 18 | 1.9 | 18 | Good | 22 | 92 | Good | 0.8 | 0.4 |
| Comparative Example 1 | 24 | 2.0 | 18 | Poor | 23 | 92 | Good | 3.2 | 2.3 |
| Comparative Example 2 | 20 | 1.3 | 16 | Good | 22 | 74 | Good | 0.9 | 0.4 |
| Comparative Example 3 | 25 | 1.8 | 12 | Good | 23 | 94 | Good | 0.9 | 0.3 |
| Comparative Example 4 | 5 | 1.1 | 18 | Fair | 23 | 92 | Good | 2.0 | 1.6 |
| Comparative Example 5 | 100 | 3.0 | 18 | Poor | 21 | 92 | Good | 3.5 | 2.5 |
| Comparative Example 6 | 2 | 0.4 | 20 | Good | 13 | 92 | Poor | 0.6 | 0.4 |
| Comparative Example 7 | 2 | 0.5 | 20 | Good | 20 | 48 | Good | 0.7 | 0.7 |

INDUSTRIAL APPLICABILITY

According to the present invention, gas barrier performance is improved to a large extent by preparing a layered film in which a predetermined coating layer adapted to required performances is stacked onto a polypropylene stretched substrate film; further toughness and heat resistance is ensured by laminating two the layered films together; and finally mono-materialization is realized with high sealability maintained by laminating a sealant composed of an olefin component. In addition, the layered body of the present invention can be manufactured easily and with a small number of processing steps, and thus is excellent in both of economy and production stability, and can provide a gas barrier laminated body having homogeneous properties.

**Claims**

1. A laminated body in which two stretched substrate films containing a polypropylene resin as a raw material and one heat sealable layer containing a resin are laminated with via an adhesive, wherein

   at least one of the substrate films has a coating layer containing a polyvinyl alcohol copolymer and a layered inorganic compound or an inorganic thin layer on one side of the substrate film,
   the one heat sealable layer is composed of an olefin resin containing a polypropylene resin or a polyethylene resin as a main constituent component, and
   the laminated body satisfies the following requirements (a) to (d):

   (a) the laminated body has piercing strength of 15 N or more,
   (b) the laminated body has oxygen permeability of 20 ml/m$^2$·d·MPa or less at 23 °C and 65% RH and water vapor permeability of 2.0 g/m$^2$·d or less at 40 °C and 90 % RH,
   (c) the laminated body in which the heat sealable layer is sealed at one end and another end under conditions of 160 °C and 0.2 MPa for 2 seconds has seal strength of 15 N/15mm or more, and
   (d) the laminated body has a heat shrinkage rate of 1.8 % or less at 120 °C for 5 minutes.

2. The laminated body according to claim 1, wherein the layered inorganic compound of the coating layer comprises a montmorillonite compound as a constituent component.

3. The laminated body according to claim 1 or 2, wherein an adhesion amount of the coating layer is 0.10 g/m$^2$ or more and 0.50 g/m$^2$ or less.

4. The laminated body according to any one of claims 1 to 3, wherein the inorganic thin layer is composed of aluminum oxide, silicon oxide, or a composite oxide of silicon oxide and aluminum oxide.

5. The laminated body according to any one of claims 1 to 4, wherein at least one of the substrate films has a heat shrinkage rate of 10% or less in the MD direction and the TD direction under conditions of 150 °C for 5 minutes.

## INTERNATIONAL SEARCH REPORT

International application No.

**PCT/JP2022/032422**

| A. | CLASSIFICATION OF SUBJECT MATTER |
|---|---|

*B32B 27/32*(2006.01)i
FI: B32B27/32 E

According to International Patent Classification (IPC) or to both national classification and IPC

| B. | FIELDS SEARCHED |
|---|---|

Minimum documentation searched (classification system followed by classification symbols)

B32B1/00-43/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | WO 2021/020400 A1 (TOPPAN PRINTING CO., LTD.) 04 February 2021 (2021-02-04) examples 8, 9 | 1-5 |
| Y | JP 2001-1470 A (DAICEL CHEM. IND., LTD.) 09 January 2001 (2001-01-09) examples | 1-5 |
| Y | JP 2008-132614 A (DAICEL CHEM. IND., LTD.) 12 June 2008 (2008-06-12) claims, paragraph [0062] | 1-5 |
| A | WO 2020/045629 A1 (DAINIPPON PRINTING CO., LTD.) 05 March 2020 (2020-03-05) example 7-1, paragraphs [0074]-[0080] | 1-5 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 September 2022** | **27 September 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

| International application No. |
| --- |
| **PCT/JP2022/032422** |

| Patent document cited in search report | | | Publication date (day/month/year) | Patent family member(s) | | | Publication date (day/month/year) |
| --- | --- | --- | --- | --- | --- | --- | --- |
| WO | 2021/020400 | A1 | 04 February 2021 | US 2022/0153006 A1 examples 8, 9 JP 2021-20391 A CN 114126974 A | | | |
| JP | 2001-1470 | A | 09 January 2001 | (Family: none) | | | |
| JP | 2008-132614 | A | 12 June 2008 | (Family: none) | | | |
| WO | 2020/045629 | A1 | 05 March 2020 | EP 3845380 A1 example 7-1, paragraphs [0135]-[0143] JP 2020-37189 A JP 2020-37186 A JP 2020-40253 A JP 2020-40254 A JP 2020-40255 A JP 2020-40256 A JP 2020-40257 A JP 2020-40259 A JP 2020-40258 A JP 2020-157715 A JP 2020-157716 A US 2021/0347148 A1 | | | |

Form PCT/ISA/210 (patent family annex) (January 2015)

**EP 4 400 308 A1**

**REFERENCES CITED IN THE DESCRIPTION**

**Patent documents cited in the description**

- JP 2017165059 A
- JP 2000052501 A
- JP H04359033 A
- JP 2003231221 A
- WO 2017221781 A
- JP 3318479 B